# EUROPÄISCHE PATENTSCHRIFT

(11) **EP 0 534 197 B1**
(45) Veröffentlichungstag und Bekanntmachung des Hinweises auf die Patenterteilung: **06.12.1995**
(21) Anmeldenummer: 92115131.2
(22) Anmeldetag: 04.09.1992
(51) Int. Cl.: C08F 299/02, C08F 299/06, E21D 20/02, F16B 13/14

(54) **Patrone oder Kartusche für die chemische Befestigungstechnik**
Cartridge for chemical fixation engineering
Cartouche prévue pour la technique de fixation chimique

(30) Priorität: 21.09.1991 DE 4131457
(43) Veröffentlichungstag der Anmeldung: 31.03.1993
(73) Patentinhaber: BASF Aktiengesellschaft, 67063 Ludwigshafen (DE)
(72) Erfinder: Cramer, Edwin, Dr., W-6700 Ludwigshafen (DE); Scholz, Dankmar, W-6710 Frankenthal (DE)

(56) Entgegenhaltungen:
- EP-A- 0 432 087
- WO-A-88/03599

## Beschreibung

Die Verwendung von Reaktivharzmassen auf der Basis von ungesättigten Polyesterharzen, Vinylesterharzen oder von Epoxidharzen als Haftmittel für die chemische Befestigungstechnik ist seit langem bekannt. Es handelt sich dabei um Zweikomponentensysteme, wobei eine Komponente das Reaktivharz und die andere Komponente den Härter enthält. Andere, übliche Bestandteile wie Füllmittel, Beschleuniger, Stabilisatoren, Lösungsmittel einschließlich Reaktivlösungsmittel (Comonomere) können in der einen und/oder der anderen Komponente enthalten sein. Durch Vermischen der beiden Komponenten wird dann die Reaktion unter Bildung eines gehärteten Produktes in Gang gebracht.

Zur Befestigung von Ankerstangen in Bohrlöchern von Beton oder massivem Gestein werden im allgemeinen Patronen mit 2 Kammern zur Trennung der in der Patrone enthaltenen Komponenten verwendet. Die Patrone wird in das Bohrloch eingesetzt, und durch schlagdrehendes Einbringen des Befestigungselementes in die Bohrlöcher werden die Patrone und die Kammern zerstört. Dabei werden die beiden Komponenten gemischt und die Reaktion wird initiiert. Die ausgehärtete Reaktionsharzmasse ist in der Lage, spreizdruckfrei die Lasteinleitung in den Untergrund zu ermöglichen. Vor allen Dingen für Schwerlastverankerungen haben sich derartige Verbundanker bewährt.

Bei Verankerungen in porösem Untergrund, z.B. in Schaumblocksteinen oder in Lehmziegelsteinen, aber auch in Hohlziegelsteinen kann man mit Zweikammer-Kartuschen arbeiten. Die beiden Komponenten der Klebemasse werden gleichzeitig aus der Kartusche herausgedrückt, durch geeignete Vorrichtungen, z.B. Schnecken, vermischt und in das Bohrloch gedrückt. In dieses kann dann direkt ein verankerbares Befestigungselement mit beliebig geformtem Querschnitt eingeführt werden, welches nach dem Aushärten des Harzes im Bohrloch fixiert wird; oder man führt in das Bohrloch erst einen Dübel oder eine Innengewindehülse ein, die durch Aushärten des Harzes fixiert werden, und in die dann Schrauben bzw. Ankerstangen eingedreht werden können. Bei Hohlziegelsteinen wird in ein Bohrloch erst eine gitterförmige, zylindrische Hülse aus Kunststoff oder Metall eingesetzt. Dann wird Harz aus der Zweikammer-Kartusche eingepreßt. Durch Einführen eines Dübels oder einer Innengewindehülse wird überschüssige Klebemasse durch das Gitter der Siebhülse gedrückt, so daß sich nach dem Aushärten der Klebemasse eine feste Verankerung ausbildet.

Bei Verankerungen hinter Rigips-Platten oder in Hohlkammersteinen wendet man Kartuschen mit schaumfäbigen Klebemassen an, wie sie z.B. in EP-A 338 983 beschrieben sind. Die eine Komponente der Klebemasse enthält ein anorganisches Carbonat, z.B. Kreide, die andere Komponente eine Säure, z.B. Polyacrylsäure oder Phosphorsäure. In ein Bohrloch wird eine Innengewindehülse oder eine Siebhülse eingesetzt, in welche die schaumfähige Klebemasse eingedrückt wird. Beim Vermischen der Komponenten wird CO₂ freigesetzt, welches bewirkt, daß die Klebemasse aufschäumt und die Hohlräume ausfüllt, bzw. hinter der Platte eine pilzförmige Verankerung bildet, in der nach dem Aushärten der Klebemasse die Hülsen fixiert werden.

In EP-B 150 555 und EP-A 199 671 sind Patronen zur Verwendung beim Befestigen von Ankerbolzen beschrieben, die zwei voneinander getrennte Kammern enthalten. Die eine Kammer enthält als Reaktionsharz ein Epoxyacrylat (Vinylesterharz) zusammen mit Styrol als Comonomer, die andere ein Härtungsmittel dafür. Die DE-A 39 40 309 beschreibt Verankerungen auf Basis von vinylesterurethanharzen und Styrol. Diese Harze weisen eine hohe Härtungsgeschwindigkeit auf, die Härtungsprodukte haben eine gute Chemikalien- und Wasserbeständigkeit; die Ausreißfestigkeit der Verankerung läßt aber in vielen Fällen wegen der schlechten Haftung an silikatischen Materialien zu wünschen übrig. Darüber hinaus führt das flüchtige Comonomere Styrol zu Geruchsbelästigungen; behördliche Auflagen machen besondere Vorkehrungen bei der Herstellung und Handhabung der styrolhaltigen Klebemassen notwendig.

Der Erfindung lag daher die Aufgabe zugrunde, ein Kunstharz für die chemische Befestigungstechnik bereitzustellen, welches im ausgehärteten Zustand abgewogen gute mechanische Eigenschaften, insbesondere eine gute Haftung an silikatischen Materialien aufweist, so daß auf dieser Basis Verankerungen mit hoher Ausreißfestigkeit erzeugt werden können. Vor allem sollte das Styrol durch ein gerucharmes Comonomeres ersetzt werden.

Es wurde nun gefunden, daß diese Aufgabe gelöst wird, wenn man als Comonomer ein Acetacetoxyalkyl(meth)acrylat verwendet. Gegenstand der Erfindung ist demzufolge eine Patrone zur chemischen Befestigung von Ankerstangen in Bohrlöchern, enthaltend
I. ein Vinylesterharz oder Vinylesterurethanharz als radikalisch härtbares Kunstharz und - räumlich getrennt davon angeordnet -
II. ein Härtungsmittel für das Kunstharz,
wobei das Harz 10 bis 60 Gew.% eines Acetoacetoxyalkyl(meth)acrylats als Comonomer enthält.

Vinylester- und Vinylesterurethanharze sind bekannt. Ihnen ist gemeinsam, daß sie Vinylesterendgruppen 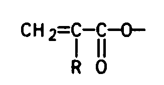
enthalten. Sie liegen im allgemeinen als flüssiges Reaktivsystem in Mischung mit bis zu 60 Gew.% an copolymerisierbaren Monomeren vor.

Unter Vinylesterharzen, die auch Epoxidacrylate genannt werden, versteht man gemeinhin Umsetzungsprodukte von Polyepoxiden mit ungesättigten Monocarbonsäuren, vorzugsweise mit Methacrylsäure. Diese Harze werden beispielsweise in GB-A 1 006 587 und in den US-PS 3 066 112 und 3 179 623 beschrieben, wobei bevorzugt Vinylesterharze auf Basis von Bisphenol A zur Anwendung kommen. Sie zeichnen sich durch hohe Zähigkeit und gute Chemikalienbeständigkeit bei begrenzter Wärmeformbeständigkeit aus. Vinylesterharze aus Epoxy-Novolakharzen und (Meth-)Acrylsäure, wie sie beispielsweise in der US-PS 3 256 226 beschrieben werden, weisen dagegen höhere Wärmeformbeständigkeiten, aber geringere Zähigkeiten auf.

Kennzeichnend für die Klasse der Vinylesterharze ist die Gruppe 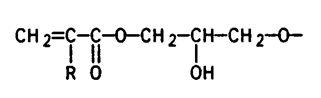
mit R=H oder CH₃.

Die zur Herstellung der Vinylester verwendeten Epoxidharze leiten sich von mehrwertigen Phenolen und Alkoholen ab. Die Epoxidäquivalentgewichte können zwischen 60 und 5000 liegen. Bevorzugte Epoxidharze sind die Glycidylether auf Basis von Bisphenol A mit Epoxidäquivalentgewichten von 140 bis 1000. Als weitere Gruppe von Polyepoxiden kommen solche auf Basis von kernhydriertem Bisphenol A und Bisphenol F, 2,2-Bis-(4-hydroxycyclohexyl)propan bzw. Bis-(4-hydroxycyclohexyl)methan, sowie epoxidierte Cycloolefine in Frage. Weiterhin stellen Polyglycidylether von Novolakharzen eine wichtige Gruppe von Epoxidharzen dar. Darunter fallen die Kondensationsprodukte von Phenol oder Kresol mit Aldehyden wie Formaldehyd oder Butyraldehyd ebenso wie Additionsprodukte von Phenol oder substituierten Phenolen mit Olefinen wie Dicyclopentadien, Isopren oder Norbornen. Weiterhin zählen zur Gruppe der bevorzugten Epoxidharze solche, die sich von Alkylenpolyphenolen ableiten, wie z.B. Bis-(4-hydroxyphenyl)methan, 1,1,2,2-Tetrakis-(4-hydroxyphenyl)ethan oder 1,1,3-Tris-(4-hydroxyphenyl)propan. Beispielhaft für Epoxidharze auf Basis mehrwertiger aliphatischer Alkohole seien genannt die Polyglycidylether von 1,4-Butandiol, 1,6-Hexandiol, Trimethylolpropan und Poly-THF.

Vinylesterurethanharze sind bekannt, z.B. aus US-A 3 297 745, US-A 3 772 404, US-A 4 618 658, GB-A 2 217 722 und DE-A 37 44 390. Sie weisen im allgemeinen folgende Gruppen auf:
a) 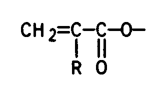 (mit R = H oder CH₃)
b) 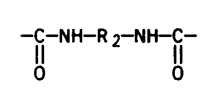 (mit R₂ = zweiwertiger aliphatischer, aromatischer oder cycloaliphatischer Rest mit 4 bis 40 C-Atomen, vorzugsweise ein aromatischer Rest mit 6 bis 20 C-Atomen),
c) -O-R₃-O-
   (mit R₃ = zweiwertiger aliphatischer, cycloaliphatischer oder aromatischer Rest mit 2 bis 500 C-Atomen, vorzugsweise ein aliphatischer Rest mit 4 bis 100 C-Atomen),
sowie gegebenenfalls
d) -NH-R₄-NH-(mit R₄ = aliphatischer, cycloaliphatischer oder aromatischer Rest mit 2 bis 100 C-Atomen).

Vorzugsweise ist das Vinylesterurethanharz ein Umsetzungsprodukt aus
- einem polyfunktionellen Isocyanat,
- gegebenenfalls einem mehrwertigen Alkohol,
- gegebenenfalls einem mehrwertigen Amin,
- einem Hydroxyalkyl-(meth)acrylat,
wobei bei der Umsetzung das Gewichtsverhältnis Isocyanat zu (Alkohol + Amin) zwischen 100:10 und 100:300 betrug und das Äquivalentverhältnis Hydroxyalkyl(meth)acrylat zu den freien Isocyanatgruppen des Umsetzungsproduktes zwischen 3:1 und 1:2 lag.

Zur Herstellung der Vinylesterurethanharze kommen alle bekannten aliphatischen, cycloaliphatischen und aromatischen Polyisocyanate mit mindestens 2 Isocyanatgruppen pro Molekül in Frage. Bevorzugte Isocyanate sind 4,4'-Diphenylmethandiisocyanate sowie das Isomerengemisch aus 2,4'- und 4,4'-Diphenylmethandiisocyanat.

Geeignete mehrwertige Alkohole sind: aliphatische Diole, alicyclische Diole, Phenole, alkoxylierte Derivate von Bisphenolen, aliphatische oder aromatische Polyetherole mit Molekulargewichten bis 5000, z.B. Polyethylenglykol oder Polypropylenglykol; sowie Polyesterole, wobei sowohl gesättigte als auch ungesättigte hydroxyterminierte Polyester in Frage kommen. Bevorzugt ist Dipropylenglykol, gegebenenfalls im Gemisch mit Polypropylenglykol.

Als Polyamine können sowohl aliphatische wie auch aromatische Amine eingesetzt werden. Besonders geeignete Amine sind langkettige Amine mit Molekulargewichten von 150 bis 5000. Die besonders bevorzugten Aminobenzoesäureester von Polytetramethylenetherglykol haben folgende Struktur: 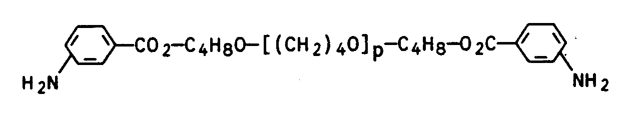
wobei p Zahlen von 5 bis 80 bedeutet.

Zum Aufbau der endständigen Doppelbindungen im Vinylesterurethan werden Hydroxyalkyl-(meth)acrylate mit den Isocyanatgruppen enthaltenden Verbindungen umgesetzt. Hydroxyalkyl-(meth)acrylate werden durch folgende allgemeine Formel beschrieben: 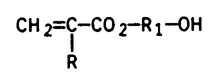
wobei R = H oder CH₃
und R₁ eine Alkylengruppe bedeuten. Hydroxyalkyl(meth)acrylate werden durch Umsetzung von (Meth)-Acrylsäure mit Alkylenoxiden wie Ethylen- oder Propylenoxid hergestellt. Geeignete Hydroxyalkyl(meth)acrylate im Sinne der Erfindung sind ferner Glycerindi-(meth)acrylate, Trimethylolpropandi(meth-)acrylate und Pentaerythrittri-(meth-)acrylate. Bevorzugt sind Hydroxypropyl(meth-)acrylat und Hydroxyethyl(meth-)acrylat.

Zur Herstellung der modifizierten Vinylesterurethanharze sind verschiedene Verfahren möglich. Einmal wird zunächst das Isocyanat mit dem Hydroxyalkyl-(meth-)acrylat vorreagiert und anschließend mit dem mehrwertigen Alkohol und/oder dem Polyamin umgesetzt. In einem zweiten Verfahren werden alle Komponenten in einer Eintopfreaktion zusammengegeben und umgesetzt. Im dritten Verfahren werden Isocyanat, Polyol und gegebenenfalls Polyamin vermischt und bei 40 bis 110°C umgesetzt. Anschließend wird die zur Absättigung der Isocyanatgruppen notwendige Menge an Hydroxyalkyl-(meth-)-acrylat zugefügt. Das Reaktionsende wird entweder spektroskopisch oder titrimetrisch durch die Abnahme der Isocyanatgruppe angezeigt. Eventuell vorhandenes, überschüssiges Polyisocyanat reagiert dabei mit dem Hydroxyalkyl(meth)acrylat zu einem verhältnismäßig niedermolekularen Vinylesterurethan, was zur Einstellung der Viskosität des Harzes ausgenutzt werden kann. Man erhält stets ein Gemisch präpolymerer Vinylesterurethane mit unterschiedlicher Kettenlänge und Molekulargewicht.

Das Vinylester- bzw. Vinylesterurethanharz enthält erfindungsgemäß 10 bis 60, vorzugsweise 20 bis 50 Gew.% eines Acetoacetoxyalkyl(meth-)acrylats als Comonomer.

Bevorzugt sind Acetoacetoxyethyl- und Acetoacetoxypropyl-methacrylat. Daneben können bis zu 30, vorzugsweise weniger als 10 Gew.% anderer, hochsiedender Comonomerer anwesend sein, z.B. Acrylate, wie Trimethylolpropantriacrylat und -methacrylat, Ethylenglykoldimethacrylat, Polyethylenglykoldimethacrylat, Butandioldimethacrylat; Allylverbindungen, wie Diallylphthalat, Allylphenole und Allylphenolether, sowie Maleinimide, wie N-Phenylmaleinimid.

Zum Zweck der Zähmodifizierung kann das Harz 2 bis 20 Gew.% eines Thermoplasten, wie Polyamid oder Polyester oder eines Kautschuks enthalten.

Als verstärkende Füllstoffe für die Bindemittelmatrix dienen z.B. Quarz, Glas, Korund, Porzellan, Steingut, Schwerspat, Leichtspat, Talkum und Kreide. Die Füllstoffe werden in Form von Sanden, Mehlen oder speziellen Formkörpern (Zylinder, Kugeln usw.) entweder der Harzlösung und/oder dem Härter (Initiator) zugemischt. Die Füllstoffe können als Fasern (fibrilläre Füllstoffe) eingesetzt werden. Bevorzugt und deutlicher verstärkend wirken sich die globulären, inerten Stoffe (Kugelform) aus.

Falls für die Peroxidhärtung Beschleuniger erforderlich sind, werden diese zweckmäßigerweise räumlich zusammen mit dem Harz, d.h. getrennt vom Härter, angeordnet. Geeignete Beschleuniger sind: Aromatische Amine wie N,N-Dimethylanilin, N,N-Diethylanilin; Toluidine und xylidine wie N,N-Diisopropylanol-para-toluidin, N,N-Dimethyl-p-toluidin, N,N-Bis-(2-hydroxyethyl)-xylidin; ferner Co-, Mn-, Sn- oder Ce-Salze, wie z.B. Cobaltoctoat oder -naphthenat.

Das Vinylester- oder Vinylesterurethanharz soll vorzugsweise eine Viskosität bei 23°C zwischen 100 und 10.000, insbesondere von 200 bis 2000 [mPa·s] aufweisen.

Räumlich getrennt vom Harz ist in der erfindungsgemäßen Patrone das Härtungsmittel angeordnet. Bevorzugte Härtungsmittel sind bei niedrigen Temperaturen zerfallende organische Peroxide. Besonders gut geeignet sind dibenzoylperoxid und Methylethylketonperoxid, ferner tert.-Butylperbenzoat, Cyclohexanonperoxid, Laurylperoxid und Cumolhydroperoxid, sowie tert.-Butylperoxy-2-ethylhexanoat.

Die Peroxide werden vorzugsweise in Mengen von 0,5 bis 10 Gew.%, vorzugsweise von 1 bis 5 Gew.%, bezogen auf das Vinylesterurethanharz, eingesetzt.

Die Härtungsmittel werden zweckmäßigerweise auf inerte Füllstoffe aufgebracht, wobei Quarzsande mit Korngrößen von 0,5 ... 3 mm für Patronendimensionen < M16 und von 3 ...6 mm bei Dimensionen > M20 bevorzugt sind.

In der Regel wird die Konfektionsform einer 2-Kammerpatrone gewählt. Als bewährte Ausführungsform haben sich Glaspatronen gezeigt, da das "Verpackungsmittel" Glas beim Mischprozeß fein zermahlen und dann als verstärkender Füllstoff in die Bindemittelmatrix integriert wird. Weiterhin können Mehrkammerpatronen aus keramischem Material eingesetzt werden, wie sie beispielsweise in DE-A 39 29 603.2 beschrieben sind. Ferner sind für großvolumige Patronen auch verschiedene Kunststoffoliensysteme - sogenannte Schlauchpatronen - einsetzbar. Grundsätzlich ist es auch möglich, eine Komponente, vorzugsweise das Härtungsmittel durch Makroverkapselung von der anderen Komponente zu trennen.

Als Kartuschen werden vorzugsweise Zweikammerkartuschen verwendet, wobei die größere Kammer das Harz und die Kleinere Kammer das Härtungsmittel enthält, jeweils zusammen mit Füllstoff. Die größere Kammer hat ein etwa 5 bis 10 mal größeres Volumen als die kleinere Kammer. Im Fall schaumfähiger Klebemassen wird zweckmäßigerweise das Carbonat zum Harz gegeben, die Säure-Komponente kann entweder mit dem Härter zusammen in eine Kammer oder aber in eine separate Kammer gefüllt werden.

Die Harze mit den erfindungsgemäßen Comonomeren können ohne Geruchsbelästigung und besondere Vorkehrungen für die chemische Befestigungstechnik eingesetzt werden. Derartige Verankerungen weisen ein gutes Rißdehnungsverhalten, geringe Schrumpfspannung und ausgezeichnete Adhäsion an mineralischen Aufnahmewerkstoffen, wie Beton, Naturstein, sowie an Schaum- und Hohlblocksteinen auf.

### Beispiele

### A. Herstellung der Harze

1. Vinylesterurethanharz
   1000 g 4,4'-Diphenylmethandiisocyanat (Lupranat MS, BASF AG) werden bei 50°C in 800 g Acetoacetoxyethylmethacrylat (AAEM) gelöst. Man gibt 2 ml Dibutylzinndilaurat zu und versetzt das Reaktionsgemisch mit 90 g Bis-(para-aminobenzoesäureester)-poly-tetrahydrofuran 650, welches in 577 g AAEM gelöst wird. Nach 10 Minuten werden bei 50°C 108 g Dipropylenglykol zugefügt und 15 Minuten nachgerührt. Danach dosiert man 865 g Hydroxypropylmethacrylat bei 50 bis 60°C zur Lösung und stabilisiert mit 350 mg Dimethylhydrochinon. Es werden weitere 600 g AAEM zugefügt. Die Viskosität bei 23°C beträgt 853 mPa·s. Zur Vorbeschleunigung des Harzes werden 50 g N,N'-Diisopropyl-para-toluidin und 1,5 g tert.-Butylbrenzkatechin eingerührt.
2. Vinylesterharz
   231 g des Bisphenol A-diglycidylethers Epikote 828 (Fa. Shell) und 580 g des Bisphenol A-diglycidylethers Epikote 1001 (Fa. Shell) werden bei 95°C vermischt. Man versetzt die Schmelze mit 0,5 g Hydrochinon, 2 g Benzyltributylammoniumchlorid und läßt bei 120°C mit 200 g Methacrylsäure reagieren. Bei einer Säurezahl < 6 wird die Schmelze in 1000 g AAEM gelöst und mit 450 ppm Hydrochinon nachstabilisiert. Die Viskosität bei 23°C beträgt 610 mPa·s. Zur Vorbeschleunigung des Harzes werden 15 g N,N'-Diisopropyl-para-toluidin und 0,5 g tert.-Butylbrenzkatechin eingerührt.

### B. Herstellung und Anwendung der Patrone (Dimension M12)

Das Harz wurde in die äußere Kammer einer Patrone eingefüllt, in die innere Kammer wurde als Härter Dibenzoylperoxid gegeben.
a) Außenpatrone

| | | |
|---|---|---|
| Glasgewicht | | 5,6 g |
| Glasaußendurchmesser | 10,75 mm | |
| Glaswandstärke | 0,55 mm | |
| Patronenlänge | 100,00 mm | |
| Vinylesterurethanharz A1 | | 4,3 g |
| Quarz 1,5 ...2,0 mm | | 6,6 g |

b) Innenpatrone

| | | |
|---|---|---|
| Glasgewicht | | 1,2 g |
| Glasaußendurchmesser | 6,50 mm | |
| Glaswandstärke | 0,65 mm | |
| Patronenlänge | 80,00 mm | |
| Dibenzoylperoxid (20%ig in Gips) | | 0,8 g |

Die Patrone wurde verschlossen und in ein Bohrloch (Durchmesser 14 mm, Länge 110 mm) eingesetzt. Eine Ankerstange (M 12) wurde in das Bohrloch eingetrieben, wobei die Glaswände der Patrone zerstört werden. Nach 3 - 4 min war das Harz geliert. Die Gesamthärtungszeit betrug 30 min. Es wurde eine Verankerung mit einer Ausreißfestigkeit von 100 kN (Versagenstest nach 30 min) erhalten.

## Patentansprüche

1. Patrone oder Kartusche zur chemischen Befestigung von Ankerstangen, Dübeln und Schrauben in Bohrlöchern, enthaltend
I. ein radikalisch härtbares Vinylester- oder Vinylesterurethan-Harz und
II. - räumlich getrennt davon angeordnet - ein Härtungsmittel für das Harz,
dadurch gekennzeichnet, daß das Harz 10 bis 60 Gew.% eines Acetoacetoxyalkyl(meth)-acrylats als Comonomer enthält.

2. Patrone oder Kartusche nach Anspruch 1, dadurch gekennzeichnet, daß das Vinylesterharz die Gruppe 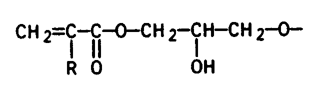 (mit R=H oder CH₃) aufweist.

3. Patrone oder Kartusche nach Anspruch 1, dadurch gekennzeichnet, daß das Vinylesterurethanharz folgende Gruppen aufweist:
a) 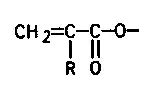 (mit R=H oder CH₃),
b) 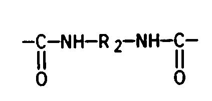 (mit R₂=zweiwertiger Rest mit 4 bis 40 C-Atomen)
c) -O-R₃-O-
(mit R₃=zweiwertiger Rest mit 2 bis 500 C-Atomen)
d) gegebenenfalls -NH-R₄-NH-
(mit R₄=zweiwertiger Rest mit 2 bis 100 C-Atomen).

4. Patrone oder Kartusche nach Anspruch 1, dadurch gekennzeichnet, daß das Harz einen Beschleuniger für das Härtungsmittel enthält, vorzugsweise Cobaltoctoat oder ein organisches Amin.

5. Patrone oder Kartusche nach Anspruch 1, dadurch gekennzeichnet, daß das Harz eine Viskosität bei 23°C zwischen 100 und 10 000 [mPa·s] aufweist.

6. Patrone oder Kartusche nach Anspruch 1, dadurch gekennzeichnet, daß das Härtungsmittel ein organisches Peroxid ist, welches in Mengen von 0,5 bis 10 Gew.-%, bezogen auf das Harz, eingesetzt wird.

7. Patrone oder Kartusche nach Anspruch 1, dadurch gekennzeichnet, daß sie zwei oder mehrere voneinander getrennte Kammern umfassen, in welchen das Harz bzw. das Härtungsmittel angeordnet sind.

## Claims

1. A capsule or cartridge for the chemical fastening of anchor bolts, plugs and screws in drill-holes, comprising
I. a free-radically curable vinyl ester or vinyl ester urethane resin and
II. - spatially separate therefrom - a curing agent for the resin,
characterized in that the resin includes from 10 to 60% by weight of an acetoacetoxyalkyl (meth)acrylate as comonomer.

2. A capsule or cartridge as claimed in claim 1, characterized in that the vinyl ester resin contains the group 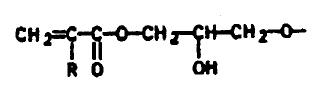 where R = H or CH₃.

3. A capsule or cartridge as claimed in claim 1, characterized in that the vinyl ester urethane resin contains the following groups:
a) 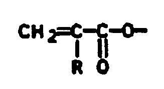 where R = H or CH₃,
b) 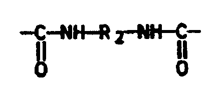 where R₂ = bivalent radical having 4 to 40 carbon atoms
c) -O-R₃-O-
where R₃ = bivalent radical having 2 to 500 carbon atoms
d) optionally -NH-R₄-NH-
where R₄ = bivalent radical having 2 to 100 carbon atoms.

4. A capsule or cartridge as claimed in claim 1, characterized in that the resin includes an accelerant for the curing agent, preferably cobalt octoate or an organic amine.

5. A capsule or cartridge as claimed in claim 1, characterized in that the resin has a viscosity at 23°C of between 100 and 10,000 [mPa·s].

6. A capsule or cartridge as claimed in claim 1, characterized in that the curing agent is an organic peroxide which is used in amounts of from 0.5 to 10% by weight, based on the resin.

7. A capsule or cartridge as claimed in claim 1, characterized in that they comprise two or more mutually separated chambers accommodating, respectively, the resin and the curing agent.

## Revendications

1. Cartouche ou gargouille pour la fixation chimique de tiges d'ancrage, goujons, chevilles et vis dans des trous de forage, contenant
I. une résine vinylester ou vinylesteruréthane durcissable par voie radicalaire, et
II. un durcisseur pour la résine, séparé spatialement de celle-ci,
caractérisée par le fait que la résine contient, comme comonomère, 10 à 60 % en poids d'un acéto-acétoxyalkyl(méth)acrylate.

2. Cartouche selon la revendication 1, caractérisée par le fait que la résine vinylester présente le groupe 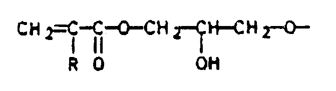 (avec R=H ou CH₃).

3. Cartouche selon la revendication 1, caractérisée par le fait que la résine vinylester présente des groupes suivants
a) 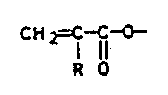 (avec R=H ou CH₃),
b) 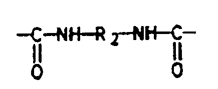 (avec R₂ = reste bivalent avec 4 à 40 atomes C)
c) -O-R₃-O-
(avec R₃ = reste bivalent avec 2 à 500 atomes C)
d) éventuellement -NH-R₄-NH-
(avec R₄ = reste bivalent avec 2 à 100 atomes C).

4. Cartouche selon la revendication 1 caractérisée par le fait que la résine contient un accélérateur pour le durcisseur, avantageusement de l'octoate de cobalt ou une amine organique.

5. Cartouche selon la revendication 1, caractérisée par le fait que la résine présente une viscosité à 23°C comprise entre 100 et 10000 (mPa.s).

6. Cartouche selon la revendication 1 caractérisée par le fait que le durcisseur est un peroxyde organique qui est utilisé en proportion de 0,5 à 10 % en poids, rapportée à la résine.

7. Cartouche selon la revendication 1 caractérisée par le fait qu'elle englobe deux ou plusieurs chambres séparées les unes des autres et dans lesquelles est disposée la résine ou le durcisseur.
